# EUROPEAN PATENT SPECIFICATION

(11) **EP 1 139 308 B1**
(45) Date of publication and mention of the grant of the patent: **11.05.2005**
(21) Application number: 98958262.2
(22) Date of filing: 10.12.1998
(51) Int. Cl.: G07F 7/08

(54) **PROCESS FOR EXECUTING A FINANCIAL TRANSACTION, IN REAL TIME, BETWEEN TWO PARTS WHICH ARE CONNECTED THROUGH A COMPUTER NETWORK, AND SYSTEM FOR ITS IMPLEMENTATION**
VERFAHREN ZUM ERMÖGLICHEN EINER FINANZIELLEN TRANSAKTION IN ECHTZEIT ZWISCHEN ZWEI ÜBER EIN RECHNERNETZWERK VERBUNDENEN TEILEN, UND SYSTEM ZU SEINER DURCHFÜHRUNG
PROCEDE PERMETTANT D'EFFECTUER UNE TRANSACTION ECONOMIQUE EN TEMPS REEL ENTRE DEUX PARTIES CONNECTEES VIA UN RESEAU INFORMATIQUE ET SYSTEME POUR SA MISE EN OEUVRE

(43) Date of publication of application: 04.10.2001
(73) Proprietor: Ben-Mizzian, Maria Cruz, 08009 Barcelona (ES); Piana, Pietro Paolo, 08009 Barcelona (ES)
(72) Inventor: Ben-Mizzian, Maria Cruz, 08009 Barcelona (ES); Piana, Pietro Paolo, 08009 Barcelona (ES)
(74) Representative: Dendorfer, Claus, Dr.
(86) International application number: PCT/ES1998/000336
(87) International publication number: WO 2000/034926

(56) References cited:
- EP-A- 0 421 808
- EP-A- 0 793 205
- EP-A- 0 854 454
- GB-A- 2 306 241

## Description

### Field of the invention

This invention relates to process for allowing a real-time economic transaction between two parties connected through a computer network, one of the parties being an individual or a company paying a given amount of money either for a service received or goods purchased through the network or for an another reason and the other party being an individual or a company collecting the said amount. The invention also relates to a system for implementing the said process.

For a simplest wording of this specification, thereafter the paying party shall be the "payer" and the collecting party, the "payee".

### Background of the invention

Each time there is more and more cost-associated supply and demand of services and goods through computer networks such as for instance, Internet. This means that, through a computer network of this kind and by means of related suitable computer equipments, a purchaser can connect an offerer and receive a service or purchase a product selected and immediately pay it or agree the payment by means of the payer transmitting the data related to a banking account or an electronic card associated to the payer's banking account, so that the payee can manage the collection of the amount agreed upon by directly having access to the payer's banking account.

With this procedure presently used, the payer sustains a great risk because on one hand he is left to the mercy of the payee's higher or lower level of honesty, which is acquainted with a tag of his banking account, and on the other hand, he is exposed to the risk that when he is being transmitting the said data associated to a banking account through a free access computer network, an unscrupulous individual can capture the said data and fraudulently use them to his/her own profit.

The process of the invention implies the use of "card money", that is to say amounts of money associated to a computer protocol which may be authenticated, stored, managed and transmitted by computer equipments. A typical application of the use of card money is that of cards provided with integrated circuit (referred thereafter as IC cards), popularized with the name of "smart cards". The said cards are well-known and consist in a physical support having standard dimensions on which contact terminals are arranged which can contact related terminals of reading-recording equipments through which a small microchip or data processing microunit (CPU) built in the said support and input and output digital data are transmitted between this later and outside. The said CPU supports a program for authenticating and managing digital data referring to card money and it has available a programmable memory , for example an EEPROM, for their temporary storage. With the said arrangement, an user of the said IC card can load, through a suitable reading-recording device a given amount of card money from an external temporary memory unit, for example from a banking account, to the IC card temporary memory unit and vice versa, that is to say, to unload a selected amount of money from the said card memory unit to an external memory unit, for example, a banking account or collecting terminal at any business or service company. Therefore, it is possible to load and unload given amounts of money to/from the said card and it is typically used for collecting and paying small every day small monetary transactions involved in modern life.

The document GB 2 308 001 discloses a IC card reading-recording apparatus and a process for operating with an IC card by interacting with another information system. The said process contemplates the possibility of connecting the said reading-recording apparatus to a personal computer for carrying out an economic transaction between the user's IC card and another IC card communicated through a telephone line.

The operative process proposed by this patent always demands the use of a IC card reading-recording device by at least the payer and in the event there exists a money transfer between two parties, that means that the said payer must introduce data related to a payee's IC card, which can be managed by another reading-recording device or by the same, in which case it will have available a second slot for inserting IC cards.

The document WO 92/21110 discloses a system for having access to an individual or an company rendering services through a telephone equipment. Also in this case, an authenticating device is used, such as for example an IC card, for transmitting identifying and/or confidential data from the calling party to the other party rendering the service. In some cases, such as for example for renting goods, in addition to the authenticating device it is foreseen to load the IC card with a preestablished amount of payment, monetary or equivalent units which are successively discounted as related goods are rented.

In both cases it is obvious that there exists between the two parties a transmission of identifying and/or confidential data with above risks that involves.

The patent WO 99/03073 of this applicant discloses a portable device for carrying out remote money transactions using an IC card. The said device has an IC card reading-recording device built-in, a standard safety module, a modem and a cable adapted for connecting to the telephone line through a standard connector. This device is useful, for example, for establishing communication through a telephone line with a banking account and proceeding to remotely loading-unloading amounts of card money to or from the IC card.

On the other hand, also telephone devices are known which have a built-in computer, including an alphanumeric keyboard and a tactile screen for access to Internet and videoconferences.

WO 97/19414 A1 discloses a computer network payment system in which monetary funds can be created and used for payment. When creating the funds, a unique serial number or cash key is generated and stored in a computer of a central electronic bank remote from the user's computer. When using the funds for payment, a new cash key is generated and again stored in the computer of the electronic bank. The new cash key represents the balance of the user's funds after the payment is deducted.

EP 0 778 551 A2 discloses an electronic currency system in which electronic money can be transferred between IC cards. This document further discloses a variety of terminals for use with IC cards of the system.

Although the systems disclosed in mentioned patents make possible remote interconnection between two parties for exchanging information, including transactions of card money with IC card support, they do not fully deal with the problems of real-time paying-collecting services received-rendered or goods purchased-sold through Internet without the need of transmission confidential data through the network is required and without one of the parties having access to the banking account or to the other party's authenticating device.

### Short exposure of the invention

Therefore, an object of this invention is to provide a process for allowing an economic transaction between a payer and a payee connected through a computer network, by means of which the payer can release, in real time, a given amount of money to the payee and the payee can receive the said given amount at once without at any moment there exists on the side of the payer any transmission at all of data associated to a banking account thereof and, thus, without the payee has at any moment access to the said banking account and, in general, without the identification of the payer by the payee be required, preventing thus, in addition, the possibility that the said data come into the hands of a third party.

To achieve this object, this invention provides a process and a system having the features of claims 1 and 10, respectively.

According to the process of the present invention, the payer first connects the payee through the network for receiving a service or purchasing goods and thereafter he loads an amount of money from his banking account, preferably through a second telecommunication line, while keeping the said first connection with the payee open. When the payer received the information referring to the amount agreed to be paid through the said second line, he preferably proceeds to load exactly the said amount from his banking account through the said second line to the payer's temporary memory means, and thereafter he preferably proceeds to send an order which will generate the transmission of the said amount from the said temporary memory means to the payee's collecting equipment. With this modality, although the payer carries out two connections and keeps them simultaneously open, one with the banking account and the other with the payer, respectively, at no moment the payee has access to the payer's account, but only to the amount loaded in the payer's temporary memory means allowed by him.

The system of the invention foresees the existence of different equipments for implementing the different modalities of the process. For example, the payer has available:
means based on a computer capable to be connected to the said computer network to have access to the payee's computer equipments by means of a standard communication program and in addition he has available, the payer's temporary memory unit, a reading-recording device of the said temporary memory unit and a standard safety module, associated to the said payer's computer.
Means, for instance a second modem are in addition associated to the payer's equipments for carrying out the said connection through a second telecommunication line or sharing a same line.

The said reading-recording device of the payer's temporary memory unit, the said standard safety module and, optionally, the said second modem, can either be built up in the payer's computer or form part of an external reading-recording unit, communicated with the said payer's computer through a connecting cable by means of a suitable communication protocol, for example, a RS232. Also, the said payer's temporary memory unit can be built in the payer's computer or it can be withdrawable and packtype, in which case the said temporary memory unit is typically comprised in a standard IC card and the said reading-recording device is a standard IC card reading-recording device, incorporating or not a modem.

As IC cards reading-recording external unit with built-in modem the portable device disclosed in the patent of this applicant, WO 99/03073 provided with a connecting cable with the computer added is useful.

The operating modalities designed to the payee are as follows. According to a first modality, the payee proceeds to load in his own temporary memory means the amount of money received from the payer to his own temporary memory means at same time that the said amount is received. According to a second modality, the payee connects the banking account he holds for transferring the amount received, which is temporarily loaded in the temporary memory means, to the said banking account once the connection with the payer is finished or to carry out the said transfer during a connection carried out through a second telecommunication line, keeping the first connection with the payer open. In this second case, even the payee's temporary memory means could be omitted directly loading the incoming amount to the payee's banking account.

As in the case of the payer, for the payee the system of this invention foresees computer-based means, temporary memory means and the said temporary memory reading-recording device, as well as a standard safety module. The said reading-recording device of the payee's temporary memory unit, the said standard safety module and optionally the said second modem can either be built in the payee's computer or form part of an external reading-recording unit, communicated with the said payee's computer through a connecting cable by means of a suitable communication protocol, for example, a RS232. Also, the said payee's temporary memory unit can be built in the payee's computer or it can be withdrawable and packtype, in which case the said temporary memory unit typically consists in a standard IC card and the said reading-recording device is a standard IC card reading-recording device. Also, for the payee the portable device disclosed in the patent WO 99/03073 of this applicant provided with a suitable connecting cable to the computer would be useful.

### Short description of the drawings

A detailed of the invention is given below with reference to the appended drawings, in which:
Fig. 1 is an illustrative diagram of an example which shows, when combined with one of the embodiments of Fig. 3 or Fig. 4 with respect to the mode of operation of the payer, a first modality of the operation as for the payee;
FIG. 2 is an illustrative diagram of another example which shows, when combined with one of the embodiments of Fig. 3 or Fig. 4 with respect to the mode of operation of the payer, said first modality of operation;
Fig. 3 is an illustrative diagram of an example of embodiment according to a second modality of operation, as well for the payer as for the payee; and
Fig. 4 is an illustrative diagram of another example of embodiment according to the said second modality of operation.

### Detailed description of the examples of embodiment

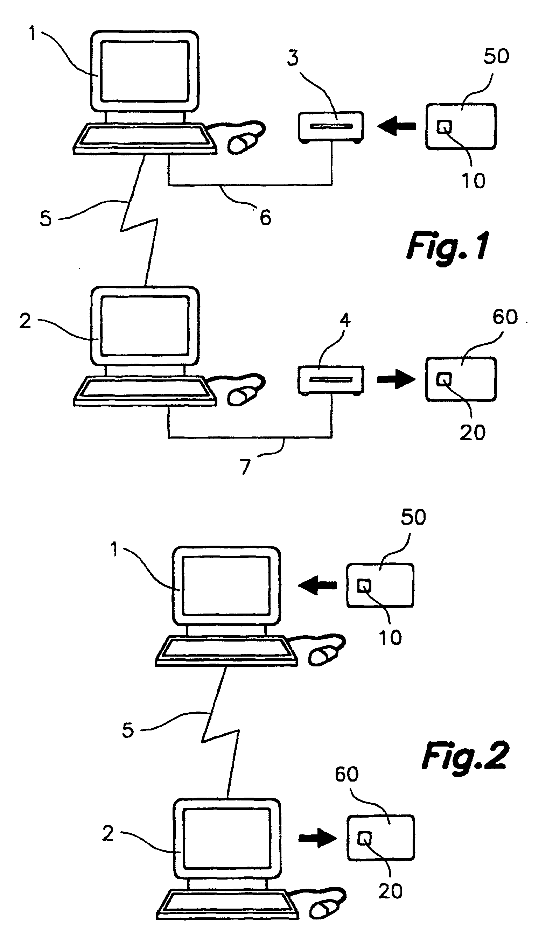

Referring first to Fig. 1, a computer 1 of the payer is connected through a computer network by means of a telecommunication line 5 to the payee's computer 2. The payer's IC card reading-recording device 3 is connected by a connecting cable 6 to the payer's computer 1 while the payee's IC cards 60 reading-recording device 4 is connected by means of a connecting cable 7 to the payee's computer 2. As well the payer's computer 1 as the payee's computer 2 have available corresponding standard modem and communication program for interconnecting each other through the computer line, the said conventional equipments being mostly domestic PC.

IC cards 50, 60 are cards which include an integrated circuit comprising a microprocessor, a temporary memory unit for temporarily storing digital data and a program for managing the said data. IC cards 50, 60 includes, on their surface, terminals which can contact related terminals of the reading-recording devices for transferring data to each other. As well the sizes of the card as the sizes of the terminals located on this later are standardized according to the standard "Smart Card" ISO 7816 (with asynchronous protocol ISO 7816/3) and are generally used throughout the world while the reading-recording devices are adapted to the said standardized sizes.

With the arrangement of Fig. 1, the payer has available an IC card 50 in the temporary memory 10 of which an amount of card money estimated enough for paying a service or goods sought to be ordered through the network is stored. The said amount was previously loaded through any of the conventional procedures well-known by the user of that kind of cards. According to the present invention, however, the amount would be loaded after a connection with the payee has been established and while keeping this connection open. During this connection between the payer and the payee through the said computer line, the payee communicates to the payer an amount to be paid for a service received or to be received or for goods purchased or to be purchased. At that moment, the payer introduces an order which validates through the payer's computer 1, the transfer of the said amount from the payer's IC card 50 temporary memory means 10, by means of the payer's reading-recording device 3, to the payee's computer 2, which in this example, would order the load of the said amount to a related temporary memory 20 of the payee's IC card 60 by means of the payee's reading-recording device 4. After the safe reception of the amount agreed upon, the payee releases the payer an electronic message of agreement through the network, which can include other data of financial or fiscal interest (in which case the payer has to transfer an identity authentication) and be printed by the payer with conventional printing means. At this point, the connection between the payer and the payee can be cancelled. Later on, the payee could transfer the card money from his IC card 50 to a different destination, using any of the said conventional and well-known procedures.

The example illustrated in Fig. 2 allows to operate in a way identical to that of Fig. 1. The difference stands in the fact that in this case, the respective payer's and payee's IC card reading-recording devices 50, 60 including safety modules are respectively built in the payer's computer 1 and in the payee's computer 2, which in addition will be provided with respective slots for inserting IC card.

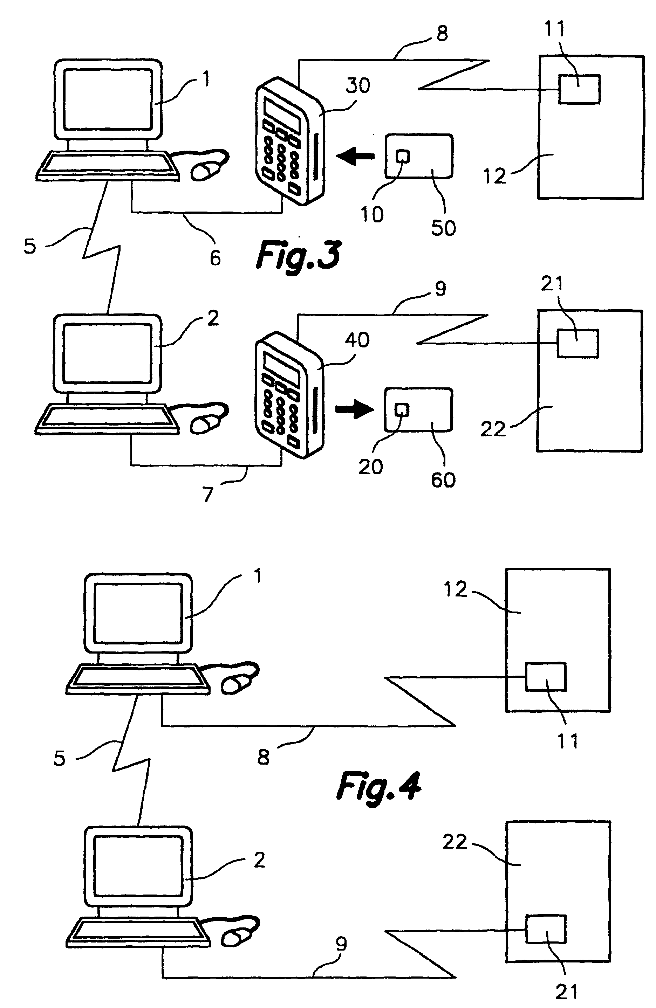

Now referring to Fig. 3, as up to now the payer's computer 1 is connected through the computer network by means of the telecommunication line 5 to the payee's computer 2. Also, the payer's IC card 50 reading-recording device 30 is connected by a connecting cable 6 to the payer's computer 1 while the payee's IC card 40 reading-recording device is connected by means of a connecting cable 7 to the payer's computer 2, but in this case, the payer's reading-recording device 30 includes a modem and is connected through a second telecommunication line 8 to the payer's banking account 11 in a finance company 12, and in same way, the payer's reading-recording device 40 includes a modem and is connected through a second telecommunication line 9 to the payer's banking account 21 in a finance company 22. The reading-recording devices 30, 40 can be as those disclosed in the patent WO 99/03073 but with related connections 6, 7 to the payer and payee computers 1, 2, respectively.

The said arrangement, in addition to allow an embodiment identical to the one disclosed as reference in Figs. 1 and 2, allows a new embodiment which is as exposed below. First the communication between the payer and the payee is established in above disclosed conventional way, without the payer having to necessarily dispose of any amount of money loaded in the temporary memory 10 of his IC card 50. At the moment when the payer receives the information relative to the amount he must pay the payee, the payer establishes a second connection through a second line 8 with his banking account 11, keeping the communication with the payee open through the first line 5. Then, the payer orders the transfer of the accurate amount to be paid from his banking account 11 to the temporary memory 10 of his IC card 50. At that moment, the payer may cancel the connection through the second line 8 with his banking account. Thereafter, the payer orders the transfer of the amount stored in memory 10 of his IC card 50 to the payee's computer 2, which can order to load the said incoming amount to related temporary memory 20 of his IC card 60, or even to load it directly to his banking account through a connection by means of related second line 9.

With the example of embodiment illustrated in Fig. 4, same embodiment is allowed as in the example of Fig. 3. The difference stands in the fact that in this case, instead of the temporary memories 10, 20 and remaining electronic elements of respective payer's and payee's IC cards 50, 60, respective computers 1, 2 incorporate related specific temporary memory units built in them and related management programs, as well as related reading-recording devices, safety modules and respective second modems, instead of the respective external reading-recording devices 30, 40. In this case, no standardized withdrawable portable IC cards or reading-recording devices thereof are used.

In the embodiment illustrated in the examples of embodiment of Fig. 3 and 4, there exists a communication route between the payer's computer 1 and a banking account 11 he holds in a banking institution 12 and/or a communication route between the payer's computer 2 and a banking account 21 he holds in a banking institution 22, but in no case there exists the possibility the payee has an access to the payer's banking account or vice versa, nor transmission of confidential information referring to the said accounts through the network.

In above disclosed embodiments which foresee a simultaneous double connection by means of two modems, the said double connection, instead of being carried out using two telecommunication lines, can be carried out through a same line using a device making them compatible.

A man of the art could introduce multiple variations in above process and system without being beyond the scope of this invention which is defined by appended claims.

## Claims

1. Process for allowing an economic transaction in real time between two parties connected through a computer network, one of the parties being an individual or company paying a given amount of money either for a service received or goods purchased through said computer network or for any other reason, and the other party being an individual or a company collecting the amount, the process comprising the following steps:
- connecting, from a payer's computer means (1) and by means of a standard program and telecommunication line (5), to said computer network for having access to a payee's computer means (2);
- communicating between a payer's temporary memory means (10) where an amount of money corresponding to a digital information according to an authentication and validation protocol is stored/loaded by means of transfer from a payer's banking account (11) at a finance company (12) and said communication program, the payer's temporary memory means (10) being locally associated with the payer's computer means (1), said operation of loading the amount of money in the payer's temporary memory means (10) being carried out, by means of transfer from the payer's banking account (11) at the finance company (12) to the payer's temporary memory means (10), after the connection through the network with the payee's computer means (2) has been established and while keeping the connection open;
- electronically transferring, in real time, through the communication line (5) fully or partly the amount of money stored in the payer's temporary memory means (10) to collecting means associated with the payee's computer means (2), capable of acknowledging the payment according to the authentication and validation protocol, after the payer placed the order; and
- the payee confirming the correct reception of the money transfer to the payer by means of an electronic message of agreement sent through the network, which can include other financial or fiscal data and can be printed through conventional printing means.

2. Process, according to claim 1, **characterized in that** it comprises in addition the step of the payee loading the amount of money received in the payee's temporary memory means (20) or transferring it to the payee's banking account (21) at a finance company (22).

3. Process, according to claim 1, **characterized in that** the electronic money loading from the payer's banking account (11) to the payer's temporary memory means (10) is remotely carried out by means of a connection through a second telecommunication line (8), using means built in the payer's computer means (1).

4. Process, according to claim 1, **characterized in that** the electronic money loading operation from the payer's banking account (11) to the payer's temporary memory means (10) is carried out by means independent from the payer's computers means (1).

5. Process, according to claim 4, **characterized in that** the independent means for electronically loading the money are remote loading means (30) capable of being connected to the payer's banking account (11) through a telecommunication line (8).

6. Process, according to the claim 5, **characterized in that** the remote loading means (30) communicate with the payer's computer means (1).

7. Process, according to claim 2, **characterized in that** the loading of the amount of money received in the payee's temporary memory means (20) is carried out either with means built in the payee computer means (2) or with independent loading means (4, 40) connected to them.

8. Process, according to any of the preceding claims, **characterized in that** the temporary memory means (10) are withdrawable and packtype.

9. Process, according to claim 2, **characterized in that** the electronic loading of the amount of money received by the payee to the payee's banking account (21) is carried out using means provided with a second modem, built in the payee's computer means (2) or external to them, by means of a simultaneous connection with the payee's banking account (21) through a second telecommunication line (9).

10. System for carrying out a real-time economic transaction between two parties connected through a computer network, one of the parties being an individual or company paying a given amount of money either for a service received or goods purchased through the computer network or for any other reason and the other party being an individual or a company collecting the amount, the system comprising at least the following devices:
- means based at the payer's computer (1) capable to connect to a computer network to have access to a payee's computer equipment (2) by means of a standard communication program, and means for connecting with a payer's banking account (11) at a finance company (12) through a telecommunication line (8) after the connection between the payer's computer (1) and the payee's computer (2) through another telecommunication line (5) has been established and while keeping said connection open;
- a payer's temporary memory unit (10) locally associated with the payer's computer (1);
- means for electronically transferring an amount of money from the payer's banking account (11) to the payer's temporary memory unit (10);
- a reading-recording device (3, 30) for the temporary memory unit (10);
- means based at the payee's computer (2) capable to be connected to the computer network to have access to the payer's computer (1) by means of a standard communication program; and
- means for electronically transferring, in real-time, fully or partly, the amount of money stored in the payer's temporary memory unit (10) to collecting means (20) associated with the payee's computer (2).

11. System, according to claim 10, **characterized in that** the means based at the payer's computer (1) capable to connect to a computer network comprise at least a first modem, and **in that** the means for connecting with a payer's banking account (11) at a finance company (12) through a telecommunication line (8) comprise a second modem.

12. System, according to claim 10 or claim 11, **characterized in that** the means based at the payee's computer (2) capable to be connected to the computer network to have access to the payer's computer (1) comprise at least a first modem.

13. System, according to one of claims 10 to 12, **characterized in that** the reading-recording device of the payer's temporary memory unit (10) and the standard module are integrated in the payer's computer (1).

14. System according to claim 11, **characterized in that** the second modem is built into the payer's computer (1).

15. System according to claim 11, **characterized in that** the reading-recording device of the payer's temporary memory unit (10) and a standard safety module form part of an external reading-recording unit (3, 30) communicated with the payer's computer (1) through a connecting cable (6).

16. System, according to claim 15, **characterized in that** the second modem is built into the external reading-recording unit (30).

17. System, according to any of the claims 10 to 16, **characterized in that** the payer's temporary memory unit (10) is withdrawable and packtype.

18. System according to claim 17, **characterized in that** the withdrawable temporary memory unit (10) is a standard card provided with integrated circuit (IC card) (50) and the reading-recording device is a standard IC card reading-recording device.

19. System, according to any of the claims 10 to 16, **characterized in that** the temporary memory unit (10) is built in the payer's computer (1).

20. System, according to one of claims 10 to 12, **characterized in that** it comprises, in addition, the payee's temporary memory unit (20), a reading-recording device (4, 40) for the temporary memory unit and a standard safety module, associated with the payee's computer (2).

21. System, according to claim 20, **characterized in that** the reading-recording device of the payee's temporary memory unit (20) and the standard safety module are integrated in the payee's computer (2).

22. System, according to claim 21, **characterized in that** the reading-recording device of the payee's temporary memory unit and the standard safety module, form part of an external reading-recording unit (4, 40) communicated with the payee's computer (2) through a connecting cable (7).

23. System, according to claim 12 and claim 21, **characterized in that** the payee's computer (2) comprises, in addition, a second modem built in same for connecting the reading-recording device to the payee's banking account (21) in a finance company (22) through a telecommunication line (9) after the connection between the payer's computer (1) and the payee's computer (2) through another telecommunication line (5) and keeping the connection open or after this connection has been closed.

24. System, according to claim 12 and claim 22, **characterized in that** the payee's external reading-recording unit (40) comprises in addition a second modem built in it for connecting to the payee's banking account (21) in a finance company (22) through a telecommunication line (9) after the communication between the payer's computer (1) and the payee's computer (2) through another telecommunication line (5) and keeping the connection open or after this connection has been closed.

25. System, according to any of the claims 20 to 24, **characterized in that** the payer's temporary memory unit (20) is withdrawable and packtype.

26. System, according to claim 25, **characterized in that** the withdrawable temporary memory unit (20) is comprised in a standard card provided with an integrated circuit (IC card) (60), and the reading-recording device is a standard IC card reading-recording device.

27. System, according to claim 21, **characterized in that** the temporary memory unit (20) is also built in the payee's computer (2).

28. System, according to claim 12, **characterized in that** the payee's computer (2) comprises in addition a second modem built in it for connecting with the payee's banking account (21) in a finance company (22) through a telecommunication line (9) after the connection between the payer's computer (1) and the payee's computer (2) through another telecommunication line (5) and keeping the connection open for directly transferring the amount of money incoming to the banking account (21).

## Patentansprüche

1. Verfahren, das eine Finanztransaktion in Echtzeit zwischen zwei über ein Computernetz verbundenen Parteien gestattet, wobei eine der Parteien eine Einzelperson oder Gesellschaft ist, die einen bestimmten Geldbetrag entweder für eine erhaltene Dienstleistung oder für über das Computernetz gekaufte Güter oder aus irgendeinem anderen Grund zahlt, und die andere Partei eine Einzelperson oder eine Gesellschaft ist, die den Betrag erhält, wobei das Verfahren die folgenden Schritte aufweist:
- Verbinden von einer Computereinrichtung (1) der zahlenden Partei und mittels eines üblichen Programms und einer Telekommunikationsleitung (5) zu dem Computernetz, um auf eine Computereinrichtung (2) des Zahlungsempfängers zuzugreifen;
- Kommunikation zwischen einer Einrichtung (10) des Zahlenden zur zeitweisen Speicherung, in die ein Geldbetrag, der digitalen Informationen gemäß einem Authentisierungs- und Validierungsprotokoll entspricht, mittels einer Übertragung von einem Bankkonto (11) des Zahlenden bei einer Finanzgesellschaft (12) und des Kommunikationsprogramms gespeichert/geladen wird, wobei die Einrichtung (10) des Zahlenden zur zeitweisen Speicherung der Computereinrichtung (1) des Zahlenden räumlich zugeordnet ist, und wobei der Vorgang des Ladens des Geldbetrags in die Einrichtung (10) des Zahlenden zur zeitweisen Speicherung mittels einer Übertragung von dem Bankkonto (11) des Zahlenden bei der Finanzgesellschaft (12) zu der Einrichtung (10) des Zahlenden zur zeitweisen Speicherung durchgeführt wird, nachdem die Verbindung über das Netz mit der Computereinrichtung (2) des Zahlungsempfängers hergestellt worden ist und während diese Verbindung offengehalten wird;
- elektronisches, vollständiges oder teilweises Übertragen, in Echtzeit, des in der Einrichtung (10) des Zahlenden zur zeitweisen Speicherung gespeicherten Geldbetrags über die Kommunikationsleitung (5) an eine Empfangseinrichtung, die der Computereinrichtung (2) des Zahlungsempfängers zugeordnet ist und die dazu eingerichtet ist, die Zahlung gemäß dem Authentisierungs- und Validierungsprotokoll zu bestätigen, nachdem der Zahlende den Auftrag gegeben hat; und
- durch den Zahlungsempfänger ausgeführtes und an den Zahlenden gerichtetes Bestätigen des korrekten Empfangs der Geldübertragung mittels einer elektronischen und über das Netz gesendeten Bestätigungsnachricht, die weitere Finanzoder Steuerdaten enthalten kann und die mittels einer üblichen Druckeinrichtung ausgedruckt werden kann.

2. Verfahren gemäß Anspruch 1, **dadurch gekennzeichnet, dass** das Verfahren ferner den Schritt aufweist, dass der Zahlungsempfänger den erhaltenen Geldbetrag in die Einrichtung (20) des Zahlungsempfängers zur zeitweisen Speicherung lädt oder der Zahlungsempfänger den Geldbetrag an das Bankkonto (21) des Zahlungsempfängers bei einer Finanzgesellschaft (22) überträgt.

3. Verfahren gemäß Anspruch 1, **dadurch gekennzeichnet, dass** das elektronische Laden von Geld von dem Bankkonto (11) des Zahlenden zur Einrichtung (10) des Zahlenden zur zeitweisen Speicherung aus der Ferne mittels einer Verbindung über eine zweite Telekommunikationsleitung (8) unter Verwendung von Mitteln, die in die Computereinrichtung (1) des Zahlenden eingebaut sind, ausgeführt wird.

4. Verfahren gemäß Anspruch 1, **dadurch gekennzeichnet, dass** der Vorgang des elektronischen Ladens von Geld von dem Bankkonto (11) des Zahlenden an die Einrichtung (10) des Zahlenden zur zeitweisen Speicherung durch eine von der Computereinrichtung (1) des Zahlenden unabhängige Einrichtung ausgeführt wird.

5. Verfahren gemäß Anspruch 4, **dadurch gekennzeichnet, dass** die unabhängige Einrichtung zum elektronischen Laden des Geldes eine Fernladeeinrichtung (30) ist, die dazu eingerichtet ist, über eine Telekommunikationsleitung (8) mit dem Bankkonto (11) des Zahlenden verbunden zu werden.

6. Verfahren gemäß Anspruch 5, **dadurch gekennzeichnet, dass** die Fernladeeinrichtung (30) mit der Computereinrichtung (1) des Zahlenden kommuniziert.

7. Verfahren gemäß Anspruch 2, **dadurch gekennzeichnet, dass** das Laden des erhaltenen Geldbetrags in die Einrichtung (20) des Zahlungsempfängers zur zeitweisen Speicherung entweder mittels einer Einrichtung ausgeführt wird, die in die Computereinrichtung (2) des Zahlungsempfängers eingebaut ist, oder mittels einer unabhängigen Ladeeinrichtung (4, 40), die mit dieser Computereinrichtung (2) verbunden ist.

8. Verfahren gemäß einem der vorhergehenden Ansprüche, **dadurch gekennzeichnet, dass** die Einrichtung (10) zur zeitweisen Speicherung entfernbar und modulartig ausgestaltet ist.

9. Verfahren gemäß Anspruch 2, **dadurch gekennzeichnet, dass** das elektronische Laden des vom Zahlungsempfänger erhaltenen Geldbetrags in das Bankkonto (21) des Zahlungsempfängers mittels einer Einrichtung ausgeführt wird, die ein zweites Modem aufweist, welches in die Computereinrichtung (2) des Zahlungsempfängers eingebaut ist oder extern dazu angeordnet ist, und zwar mittels einer gleichzeitigen Verbindung mit dem Bankkonto (21) des Zahlungsempfängers über eine zweite Telekommunikationsleitung (9).

10. System zum Ausführen einer Echtzeit-Finanztransaktion zwischen zwei über ein Computernetz verbundenen Parteien, wobei eine der Parteien eine Einzelperson oder eine Firma ist, die einen bestimmten Geldbetrag entweder für eine erhaltene Dienstleistung oder für über das Computernetz gekaufte Waren oder aus irgendeinem anderen Grund zahlt, und die andere Partei eine Einzelperson oder eine Firma ist, die den Betrag erhält, wobei das System zumindest die folgenden Einrichtungen aufweist:
- eine bei dem Computer (1) des Zahlenden befindliche Einrichtung, die dazu eingerichtet ist, mittels eines üblichen Kommunikationsprogramms Verbindung mit einem Computernetz aufzunehmen, um auf eine Computereinrichtung (2) eines Zahlungsempfängers zuzugreifen, und eine Einrichtung zum Verbinden mit einem Bankkonto (11) des Zahlenden bei einer Finanzgesellschaft (12) über eine Telekommunikationsleitung (8), nachdem die Verbindung zwischen dem Computer (1) des Zahlenden und dem Computer (2) des Zahlungsempfängers über eine andere Telekommunikationsleitung (5) hergestellt worden ist und während diese Verbindung offengehalten wird;
- eine dem Computer (1) des Zahlenden räumlich zugeordnete Einrichtung (10) des Zahlenden zur zeitweisen Speicherung;
- eine Einrichtung zum elektronischen Übertragen eines Geldbetrags von dem Bankkonto (11) des Zahlenden zu der Einrichtung (10) des Zahlenden zur zeitweisen Speicherung;
- eine Lese-/Schreibeinrichtung (3, 30) für die Einrichtung (10) zur zeitweisen Speicherung;
- eine bei dem Computer (2) des Zahlungsempfängers befindliche Einrichtung, die dazu eingerichtet ist, mittels eines gewöhnlichen Kommunikationsprogramms mit dem Computernetz verbunden zu werden, um auf den Computer (1) des Zahlenden zuzugreifen; und
- eine Einrichtung zum elektronischen, vollständigen oder teilweisen Übertragen, in Echtzeit, des in der Einrichtung (10) des Zahlenden zur zeitweisen Speicherung gespeicherten Geldbetrags zu einer Empfangseinrichtung (20), die dem Computer (2) des Zahlungsempfängers zugeordnet ist.

11. System gemäß Anspruch 10, **dadurch gekennzeichnet, dass** die bei dem Computer (1) des Zahlenden befindliche Einrichtung, die zur Verbindung mit einem Computernetz eingerichtet ist, zumindest ein erstes Modem aufweist, und dass die Einrichtung zum Verbinden mit einem Bankkonto (11) des Zahlenden bei einer Finanzgesellschaft (12) über eine Telefonleitung (8) ein zweites Modem aufweist.

12. System gemäß Anspruch 10 oder Anspruch 11, **dadurch gekennzeichnet, dass** die bei dem Computer (2) des Zahlungsempfängers befindliche Einrichtung, die dazu eingerichtet ist, mit dem Computernetz verbunden zu werden, um auf den Computer (1) des Zahlenden zuzugreifen, zumindest ein erstes Modem aufweist.

13. System gemäß einem der Ansprüche 10 bis 12, **dadurch gekennzeichnet, dass** die Lese-/Schreibeinrichtung der Einrichtung (10) des Zahlenden zur zeitweisen Speicherung und das übliche Modul in den Computer (1) des Zahlenden integriert sind.

14. System gemäß Anspruch 11, **dadurch gekennzeichnet, dass** das zweite Modem in den Computer (1) des Zahlenden eingebaut ist.

15. System gemäß Anspruch 11, **dadurch gekennzeichnet, dass** die Lese-/Schreibeinrichtung der Einrichtung (10) des Zahlenden zur zeitweisen Speicherung und ein übliches Sicherheitsmodul einen Teil einer externen Lese-/Schreibeinrichtung (3, 30) bilden, die mittels eines Verbindungskabels (6) an den Computer (1) des Zahlenden angeschlossen ist.

16. System gemäß Anspruch 15, **dadurch gekennzeichnet, dass** das zweite Modem in die externe Lese-/Schreibeinrichtung (30) eingebaut ist.

17. System gemäß einem der Anspruch 10 bis 16, **dadurch gekennzeichnet, dass** die Einrichtung (10) des Zahlenden zur zeitweisen Speicherung entnehmbar und modulartig ausgestaltet ist.

18. System gemäß Anspruch 17, **dadurch gekennzeichnet, dass** die entnehmbare Einrichtung (10) zur zeitweisen Speicherung eine übliche, mit einer integrierten Schaltung versehene Karte ist (IC-Karte) (50) ist, und dass die Lese-/Schreibeinrichtung ein üblicher IC-Kartenleser/-schreiber ist.

19. System gemäß einem der Ansprüche 10 bis 16, **dadurch gekennzeichnet, dass** die Einrichtung (10) zur zeitweisen Speicherung in den Computer (1) des Zahlenden eingebaut ist.

20. System gemäß einem der Ansprüche 10 bis 12, **dadurch gekennzeichnet, dass** es ferner die Einrichtung (20) des Zahlungsempfängers zur zeitweisen Speicherung, eine Lese-/Schreibeinrichtung (4, 40) für die Einrichtung zur zeitweisen Speicherung und ein dem Computer (2) des Zahlungsempfängers zugeordnetes, übliches Sicherheitsmodul aufweist.

21. System gemäß Anspruch 20, **dadurch gekennzeichnet, dass** die Lese-/Schreibeinrichtung der Einrichtung (20) des Zahlungsempfängers zur zeitweisen Speicherung und das übliche Sicherheitsmodul in den Computer (2) des Zahlungsempfängers integriert sind.

22. System gemäß Anspruch 21, **dadurch gekennzeichnet, dass** die Lese-/Schreibeinrichtung der Einrichtung des Zahlungsempfängers zur zeitweisen Speicherung und das übliche Sicherheitsmodul einen Teil einer externen Lese-/Schreibeinrichtung (4, 40) bilden, die mittels eines Verbindungskabels (7) an den Computer (2) des Zahlungsempfängers angeschlossen ist.

23. System gemäß Anspruch 12 und Anspruch 21, **dadurch gekennzeichnet, dass** der Computer (2) des Zahlungsempfängers ferner ein in ihn eingebautes zweites Modem aufweist, um die Lese-/Schreibeinrichtung mit dem Bankkonto (21) des Zahlungsempfängers bei einer Finanzgesellschaft (22) über eine Telekommunikationsleitung (9) zu verbinden, nachdem die Verbindung zwischen dem Computer (1) des Zahlenden und dem Computer (2) des Zahlungsempfängers über eine andere Telekommunikationsleitung (5) hergestellt worden ist und während die Verbindung offengehalten wird oder nachdem diese Verbindung geschlossen worden ist.

24. System gemäß Anspruch 12 und Anspruch 22, **dadurch gekennzeichnet, dass** die externe Lese-/Schreibeinrichtung (40) des Zahlungsempfängers ferner ein in sie eingebautes zweites Modem aufweist, um über eine Telekommunikationsleitung (9) mit dem Bankkonto (21) des Zahlungsempfängers bei einer Finanzgesellschaft (22) zu verbinden, nachdem die Verbindung zwischen dem Computer (1) des Zahlenden und dem Computer (2) des Zahlungsempfängers über eine andere Telekommunikationsleitung (5) hergestellt worden ist und während die Verbindung offengehalten wird oder nachdem diese Verbindung geschlossen worden ist.

25. System gemäß einem der Ansprüche 20 bis 24, **dadurch gekennzeichnet, dass** die Einrichtung (20) des Zahlenden zur zeitweisen Speicherung entnehmbar und modulartig ausgestaltet ist.

26. System gemäß Anspruch 25, **dadurch gekennzeichnet, dass** die entnehmbare Einrichtung (20) zur zeitweisen Speicherung in einer üblichen, mit einer integrierten Schaltung ausgestatteten Karte (IC-Karte) (60) enthalten ist, und dass die Lese-/Schreibeinrichtung ein üblicher IC-Kartenleser/-schreiber ist.

27. System gemäß Anspruch 21, **dadurch gekennzeichnet, dass** die Einrichtung (20) zur zeitweisen Speicherung auch in den Computer (2) des Zahlungsempfängers eingebaut ist.

28. System gemäß Anspruch 12, **dadurch gekennzeichnet, dass** der Computer (2) des Zahlungsempfängers ferner ein in ihn eingebautes zweites Modem aufweist, um über eine Telekommunikationsleitung (9) mit dem Bankkonto (21) des Zahlungsempfängers bei einer Finanzgesellschaft (22) zu verbinden, nachdem die Verbindung zwischen dem Computer (1) des Zahlenden und dem Computer (2) des Zahlungsempfängers über eine andere Telekommunikationsleitung (5) hergestellt worden ist und während die Verbindung offengehalten wird, um den eingehenden Geldbetrag unmittelbar auf das Bankkonto (21) zu übertragen.

## Revendications

1. Procédé pour permettre une transaction économique en temps réel entre deux parties reliées à travers un réseau informatique, une des parties étant une personne ou une société payant une certaine somme soit pour un service reçu soit pour des marchandises achetées à travers ce réseau informatique soit pour toute autre raison, et l'autre partie étant une personne ou une société qui recouvre la somme, le procédé comportant les étapes suivantes:
- la liaison, d'un système informatique (1) du payeur et au moyen d'un programme standard et une ligne de télécommunication (5) à ce réseau informatique pour avoir accès à un système informatique (2) du bénéficiaire;
- la communication entre un système de mémoire temporaire(10) du payeur où une somme d'argent correspondant à des informations numériques conformément à un protocole d'authentification et de validation est stockée/chargée au moyen d'un virement du compte en banque (11) du payeur à un établissement financier (12) et ce programme de communication, le système de mémoire temporaire (10) du payeur étant associés localement au système informatique (1) de ce payeur, cette opération de charger la somme d'argent dans le système de mémoire temporaire (10) du payeur étant effectuée, par virement du compte en banque (11) du payeur à l'établissement financier (12) au système de mémoire temporaire (10) du payeur, après que la liaison, à travers le réseau, au système informatique (2) du bénéficiaire ait été établie et en conservant la liaison ouverte;
- virement électronique, en temps réel, à travers la ligne de communication (5), en tout ou partie d'une somme d'argent stockée dans le système de mémoire temporaire (10) du payeur au moyen de recouvrement associé au système informatique (2) du bénéficiaire, capable d'accuser réception du paiement conformément au protocole d'authentification et de validation après que le payeur ait placé l'ordre; et
- la confirmation du bénéficiaire au payeur de la réception correcte du virement au moyen d'un message électronique d'agrément envoyé à travers le réseau, pouvant comprendre d'autres données financières ou fiscales et pouvant être imprimé à travers des moyens d'impression conventionnels.

2. Procédé, conformément à la revendication 1,
**caractérisé en ce qu'**il comporte de plus l'étape dans laquelle le bénéficiaire charge la somme d'argent reçue dans le système de mémoire temporaire (20) du bénéficiaire ou la vire au compte en banque (21) du bénéficiaire dans un établissement financier (22).

3. Procédé, conformément à la revendication 1,
**caractérisé en ce que** le chargement du compte en banque (11) du payeur au système de mémoire temporaire (10) du payeur est effectué à distance au moyen d'une liaison à travers une deuxième ligne de télécommunication (8) en utilisant des moyens incorporés au système informatique (1) du payeur.

4. Procédé, conformément à la revendication 1,
**caractérisé en ce que** l'opération électronique de charger l'argent du compte en banque (11) du payeur au système de mémoire temporaire (10) du payeur est effectuée par des moyens indépendants du système informatique (1) du payeur.

5. Procédé conformément à la revendication 4,
**caractérisé en ce que** les moyens indépendants pour charger électroniquement l'argent sont des moyens de chargement (30) distants capable d'être reliés au compte en banque (11) du payeur à travers une ligne de télécommunication (8).

6. Procédé, conformément à la revendication 5, **caractérisé en ce que** le système de chargement (30) distant communique avec le système informatique (1) du payeur.

7. Procédé, conformément à la revendication 2,
**caractérisé en ce que** le chargement de la somme d'argent reçue dans le système de mémoire temporaire (20) du bénéficiaire se fait soit avec des moyens intégrés dans le système informatique (2) du bénéficiaire, soit avec des moyens de chargement indépendants (4, 40) qui y sont reliés.

8. Procédé, conformément à une quelconque des revendications précédentes, **caractérisé en ce que** les moyens de mémoire temporaire (10) sont amovibles et portables.

9. Procédé conformément à la revendication 2,
**caractérisé en ce que** le chargement électronique de la somme d'argent reçue par le bénéficiaire dans le compte en banque (21) de ce dernier est effectué en utilisant des moyens pourvus d'un deuxième modem, intégré dans le système informatique (2) du bénéficiaire ou externe, au moyen d'une liaison simultanée au compte en banque (21) du bénéficiaire à travers une deuxième ligne de télécommunication (9).

10. Système pour effectuer une transaction économique en temps réel entre deux parties reliées à travers un réseau informatique, une des parties étant une personne ou une société qui paie une certaine somme d'argent soit pour un service reçu soit pour de marchandises achetées à travers le réseau informatique soit pour toute autre raison et l'autre partie étant une personne ou une société qui recouvre cet argent, le système comprenant au moins les dispositifs suivants:
- des moyens basés sur l'ordinateur (1) du payeur, capable d'être reliés à un réseau informatique pour avoir accès à un système informatique (2) d'un bénéficiaire au moyen d'un programme de communication standard et des moyens pour la liaison avec un compte en banque (11) du payeur dans un établissement financier (12) à travers une ligne de télécommunication (8) après que la liaison entre l'ordinateur (1) du payeur et l'ordinateur (2) du bénéficiaire à travers une autre ligne de télécommunication (5) ait été établie et en conservant cette liaison ouverte;
- une unité de mémoire temporaire (10) du payeur associée localement à l'ordinateur (1) du payeur;
- des moyens pour virer électroniquement une somme d'argent du compte en banque (11) du payeur à l'unité de mémoire temporaire (10) de ce payeur;
- un dispositif lecteur-enregistreur (3, 30) pour l'unité de mémoire temporaire (10);
- des moyens basés sur l'ordinateur (2) du payeur, capable d'être reliés au réseau informatique pour avoir accès à l'ordinateur (1) du payeur au moyen d'un programme de communication standard; et
- des moyens pour le virement électronique, en temps réel, de toute ou une partie de la somme d'argent stockée dans l'unité de mémoire temporaire (10) du payeur au système de recouvrement (20) associé à l'ordinateur (2) du payeur.

11. Système, conformément à la revendication 10, **caractérisé en ce que** les moyens basés sur l'ordinateur (1) du payeur capable d'être relié à une réseau informatique comportent au moins un premier modem, et **en ce que** les moyens pour la liaison à un compte en banque (11) du payeur dans un établissement financier (12) à travers une ligne de télécommunication (8) comportent un deuxième modem.

12. Système conformément à la revendication 10 ou à la revendication 11, **caractérisé en ce que** les moyens basés sur l'ordinateur (2) du bénéficiaire capable d'être reliés au réseau informatique pour avoir accès à l'ordinateur (1) du payeur, comportent au moins un premier modem.

13. Système, conformément à une des revendications 10 ou 12, **caractérisé en ce que** le dispositif de lecture-enregistrement de l'unité de mémoire temporaire (10) du payeur et le module standard sont intégrés dans l'ordinateur (1) du payeur.

14. Système conformément à la revendication 11, **caractérisé en ce que** le deuxième modem est intégré dans l'ordinateur (1) du payeur.

15. Système conformément à la revendication 11,
**caractérisé en ce que** le dispositif de lecture-enregistrement de l'unité de mémoire temporaire (10) du payeur et un module de sûreté standard font partie d'une unité externe de lecture-enregistrement (3, 30) qui communique avec l'ordinateur (1) du payeur à travers un câble de raccordement (6).

16. Système conformément à la revendication 15,
**caractérisé en ce que** le deuxième modem est incorporé dans l'unité externe de lecture-enregistrement (30).

17. Système, conformément à une quelconque des revendications 10 à 16, **caractérisé en ce que** l'unité de mémoire temporaire (10) du payeur est amovible et portable.

18. Système conformément à la revendication 17,
**caractérisé en ce que** l'unité de mémoire temporaire (10) amovible est une carte standard pourvue d'un circuit intégré (carte CI) (50) et le dispositif de lecture-enregistrement est un dispositif standard de lecture-enregistrement de carte CI.

19. Système conformément à une quelconque des revendications 10 à 16, **caractérisé en ce que** l'unité de mémoire temporaire (10) est intégrée dans l'ordinateur du payeur (1).

20. Système conformément à une des revendications 10 à 12, **caractérisé en ce qu'**il comporte de plus l'unité de mémoire temporaire (20) du bénéficiaire, un dispositif de lecture-enregistrement (4, 40) pour l'unité de mémoire temporaire et un module de sûreté standard, associé à l'ordinateur (2) du bénéficiaire.

21. Système conformément à la revendication 20,
**caractérisé en ce que** le dispositif de lecture-enregistrement de l'unité de mémoire temporaire (20) du bénéficiaire et le module de sûreté standard sont intégrés dans l'ordinateur (2) du bénéficiaire.

22. Système conformément à la revendication 21,
**caractérisé en ce que** le dispositif de lecture-enregistrement de l'unité de mémoire temporaire du bénéficiaire et le module de sûreté standard font partie d'une unité de lecture-enregistrement externe (4, 40) qui communique avec l'ordinateur (2) du bénéficiaire à travers un câble de raccordement (7).

23. Système, conformément à la revendication 12 et à la revendication 21, **caractérisé en ce que** l'ordinateur (2) du bénéficiaire comporte, de plus, un deuxième modem intégré dans celui-ci pour relier le dispositif de lecture-enregistrement au compte en banque (21) du bénéficiaire dans un établissement financier (22) à travers une ligne de télécommunication (9) après la liaison entre l'ordinateur (1) du payeur et l'ordinateur (2) du bénéficiaire à travers une autre ligne de télécommunication (5) et en conservant la liaison ouverte ou après que la liaison ait été fermée.

24. Système conformément à la revendication 12 et à la revendication 22, **caractérisée en ce que** l'unité externe de lecture-enregistrement (40) du bénéficiaire comporte de plus un deuxième modem qui y est intégré pour la liaison au compte en banque (21) du bénéficiaire dans un établissement financier (22) à travers une ligne de télécommunication (9) après la communication entre l'ordinateur (1) du payeur et l'ordinateur (2) du bénéficiaire à travers une autre ligne de communication (5) et en conservant la liaison ouverte ou après que la liaison ait été fermée.

25. Système conformément à une quelconque des revendications 20 à 24, **caractérisé en ce que** l'unité de mémoire temporaire (20) du payeur est amovible et portable.

26. Système conformément à la revendication 25,
**caractérisé en ce que** l'unité de mémoire temporaire amovible (20) comporte une carte standard pourvue d'un circuit intégré (carte CI) (60) et le dispositif de lecture-enregistrement est un dispositif standard de lecture-enregistrement de carte CI.

27. Système conformément à la revendication 21,
**caractérisé en ce que** l'unité de mémoire temporaire (20) est également intégrée dans l'ordinateur (2) du bénéficiaire.

28. Système conformément à la revendication 12,
**caractérisé en ce que** l'ordinateur (2) du bénéficiaire comporte de plus un deuxième modem intégré dans celui-ci pour la liaison avec le compte en banque (21) du bénéficiaire dans un établissement financier (22) à travers une ligne de télécommunication (9) après la liaison entre l'ordinateur (1) du payeur et l'ordinateur (2) du bénéficiaire à travers une autre ligne de télécommunication (5) et en conservant la liaison ouverte pour virer directement au compte en banque (21), la somme d'argent qui entre.
